# EUROPEAN PATENT SPECIFICATION

(11) **EP 2 214 248 B1**
(45) Date of publication and mention of the grant of the patent: **29.04.2015**
(21) Application number: 08849405.9
(22) Date of filing: 29.10.2008
(51) Int. Cl.: H01M 10/04, H01M 10/0562, H01M 4/131, H01M 4/13, H01M 4/36, H01M 10/052, H01M 4/04

(54) **LITHIUM BATTERY AND METHOD FOR PRODUCING THE SAME**
LITHIUMBATTERIE UND VERFAHREN ZU IHRER HERSTELLUNG
BATTERIE AU LITHIUM ET SON PROCÉDÉ DE FABRICATION

(30) Priority: 13.11.2007 JP 2007294843
(43) Date of publication of application: 04.08.2010
(73) Proprietor: Sumitomo Electric Industries, Ltd., Chuo-ku Osaka-shi Osaka 541-0041 (JP)
(72) Inventor: KANDA, Ryoko, Itami-shi Hyogo 664-0016 (JP); OTA, Nobuhiro, Itami-shi Hyogo 664-0016 (JP); UEMURA, Takashi, Itami-shi Hyogo 664-0016 (JP); YOSHIDA, Kentaro, Itami-shi Hyogo 664-0016 (JP); OGAWA, Mitsuyasu, Itami-shi Hyogo 664-0016 (JP)
(74) Representative: Boult Wade Tennant
(86) International application number: PCT/JP2008/069588
(87) International publication number: WO 2009/063747

(56) References cited:
- WO-A1-2007/004590
- JP-A- 2000 340 257
- JP-A- 2001 052 733
- JP-A- 2003 051 305
- JP-A- 2003 068 361
- JP-A- 2008 053 135
- JP-A- 2008 218 178
- JP-A- 2008 257 962
- US-A1- 2007 026 316
- OHTA N ET AL: "Enhancement of the High-Rate Capability of Solid-State Lithium Batteries by Nanoscale Interfacial Modification", ADVANCED MATERIALS, WILEY VCH VERLAG, DE, vol. 18, 1 January 2006 (2006-01-01), pages 2226-2229, XP002511133, ISSN: 0935-9648, DOI: 10.1002/ADMA.200502604
- OHTA ET AL: "LiNbO3-coated LiCoO2 as cathode material for all solid-state lithium secondary batteries", ELECTROCHEMISTRY COMMUNICATIONS, ELSEVIER, AMSTERDAM, NL, vol. 9, no. 7, 15 June 2007 (2007-06-15), pages 1486-1490, XP022118571, ISSN: 1388-2481, DOI: 10.1016/J.ELECOM.2007.02.008

## Description

### Technical Field

The present invention relates to a lithium battery including a solid electrolyte layer and a method for producing such a lithium battery.

### Background Art

Lithium-ion secondary batteries (hereinafter, simply referred to as "lithium batteries") have been used as a power supply of small electrical devices such as portable devices. Lithium batteries include a positive-electrode layer, a negative-electrode layer, and an electrolyte layer that mediates conduction of lithium ions between the positive-electrode layer and the negative-electrode layer.

In recent years, as such lithium batteries, all-solid-state lithium batteries in which an organic electrolyte solution is not used for the electrolyte layer have been proposed. In all-solid-state lithium batteries, a solid electrolyte layer is used as an electrolyte layer. Accordingly, all-solid-state lithium batteries can eliminate disadvantages caused by use of an organic electrolyte solution, for example, a safety problem caused by leakage of an electrolyte solution and a heat-resistance problem caused by volatilization of an organic electrolyte solution at high temperatures higher than the boiling point of the electrolyte solution. For the solid electrolyte layer, sulfide-based substances having a high lithium-ion conductivity and an excellent insulating property are widely used.

While such all-solid-state lithium batteries including a solid electrolyte layer have the above-described advantages, all-solid-state lithium batteries had a problem of a low discharge capacity (that is, poor output characteristic) as compared with lithium batteries including an organic electrolyte solution. The cause of this problem is that since lithium ions are more strongly attracted to oxide ions of a positive-electrode layer than to sulfide ions of the solid electrolyte layer, a layer containing lithium ions in an insufficient amount (depletion layer) is formed in a region of the sulfide solid electrolyte, the region being close to the positive-electrode layer (refer to Non-Patent Document 1). The insufficiency of lithium ions results in an increase in the electrical resistance of the depletion layer region, which decreases the discharge capacity of the lithium battery.

To solve such a problem, Non-Patent Documents 1 and 2 disclose a technique in which a layer composed of a lithium-ion conductive oxide (Li₄4Ti₅O₁₂ in Non-Patent Document 1 and LiNbO₃ in Non-Patent Document 2) is provided on the surface of a positive-electrode active material (note that the layer corresponds to a layer referred to as "a buffer layer" in the present invention). The presence of such a lithium-ion conductive oxide layer limits the migration of lithium ions and suppresses the formation of the depletion layer in the sulfide solid electrolyte layer. As a result, a decrease in the discharge capacity of the lithium battery is suppressed (that is, degradation of the output characteristic is suppressed).

[Non-Patent Document 1] Advanced Materials 2006. 18, 2226-2229
[Non-Patent Document 2] Proceedings of the 32nd Symposium on Solid State Ionics of Japan P130-131

### Disclosure of Invention

### Problems to be Solved by the Invention

However, the inventors of the present application have found the following fact. The lithium-ion conductive oxides in Non-Patent Documents above sufficiently provide the effect of suppressing the formation of a depletion layer when the positive-electrode active material is LiCoO₂. In contrast, the oxides are less likely to provide sufficiently the effect when the positive-electrode active material is another positive-electrode active material (a positive-electrode active material that substantially does not contain LiCoO₂). Accordingly, the inventions disclosed in Non-Patent Documents above are not enough to meet the need for production of lithium batteries in which positive-electrode active materials are freely used in accordance with the applications of the batteries.

In addition, the production efficiency of the lithium batteries disclosed in Non-Patent Documents above is poor. Specifically, according to these documents, a coating is formed on the surface of the active material by electrostatic atomization. This electrostatic atomization is technically difficult and complex. Additionally, unless the thickness of the coating is strictly adjusted, the performance of the resultant lithium battery is degraded. This is because, when the coating has too large a thickness, a sufficiently high electronic conduction within the positive-electrode active material is not provided and the amount of the positive-electrode active material that substantially contributes to the battery reactions is restricted.

Under these circumstances, the present invention has been achieved. Objects of the present invention are to provide a lithium battery that contains a solid electrolyte but has a high capacity and to meet the need for free selection of positive-electrode active materials depending on the application of the lithium battery. Another object of the present invention is to provide a lithium battery that is excellent in terms of productivity. Means for Solving the Problems

(A) A lithium battery according to the present invention includes: a positive-electrode layer; a negative-electrode layer; and a solid electrolyte layer that is composed of a sulfide and mediates conduction of lithium ions between the positive-electrode layer and the negative-electrode layer. The lithium battery further includes a positive-electrode covering layer that is provided on a positive-electrode-layer side of a region between the positive-electrode layer and the solid electrolyte layer and contains LiCoO₂ and a buffer layer that is provided on a solid-electrolyte-layer side of the region between the positive-electrode layer and the solid electrolyte layer and suppresses nonuniformity of distribution of lithium ions in a near-interface region of the solid electrolyte layer, the near-interface region being close to the positive-electrode covering layer. The positive-electrode layer does not contain LiCoO₂. The buffer layer is composed of LiNbO₃.

When such a configuration of the present invention is satisfied, the formation of a depletion layer in the sulfide solid electrolyte layer can be suppressed. Thus, a lithium battery according to the present invention is less likely to suffer a decrease in the discharge capacity, the decrease caused by the formation of a depletion layer. That is, a lithium battery according to the present invention has a high discharge capacity. Additionally, since the positive-electrode covering layer containing LiCoO₂ is provided between the buffer layer and the positive-electrode layer, even in a case where the positive-electrode layer is formed of a positive-electrode active material other than LiCoO₂ depending on the application of the lithium battery, the formation of a depletion layer can be effectively suppressed.

To maximize the effect of suppressing the formation of a depletion layer, the buffer layer and the positive-electrode layer are preferably made not to be in direct contact with each other. However, the buffer layer and the positive-electrode layer may be partially in contact with each other.

In the present invention, "the positive-electrode layer does not contain LiCoO₂" means that the positive-electrode layer substantially does not contain LiCoO₂. It is not intended to exclude from the scope of the present invention lithium batteries containing a trace amount of LiCoO₂ in the positive-electrode layers.

As for a method of forming the positive-electrode covering layer and the buffer layer between the positive-electrode layer and the solid electrolyte layer, known layer-formation methods such as a dry method (a physical vapor deposition method, a chemical vapor deposition method, or the like) or a wet method (for example, a coating method, a screen printing method, or the like) can be employed. Since such known methods are considerably simpler than the method of coating the surface of an active material, lithium batteries can be produced with high productivity.

(B) The buffer layer included in a lithium battery according to a reference example is preferably composed of a lithium-ion conductive oxide. In general, lithium-ion conductive compounds are oxides and sulfides. However, when the buffer layer is composed of a sulfide, a depletion layer may be formed in a region of the buffer layer, the region close to the positive-electrode layer. For this reason, the buffer layer is preferably composed of an oxide.

(C) In the present invention, the buffer layer is composed of LiNbO₃. In a reference example, examples of the lithium-ion conductive oxide include LiₓLa_{(2-x)/3}TiO₃ (x = 0.1 to 0.5), Li₄Ti₅O₁₂, Li₃.₆Si_{0.6}P_{0.4}O₄, Li_{1.3}Al_{0.3}Ti_{1.7}(PO₄)₃, Li_{1.8}Cr_{0.8}Ti_{1.2}(PO₄)₃, LiTaO₃, and Li₁.₄In₀.₄T_{1.6}(PO₄)₃. In the present invention, LiNbO₃ constituting the buffer layer is preferably diffused into the positive-electrode covering layer. The diffusion of such a compound into the positive-electrode covering layer enhances the effect of suppressing the formation of a depletion layer and the adhesion between the positive-electrode layer and the buffer layer. The compounds may be used alone or in combination.

Among the above-mentioned oxides, LiₓLa_{(2-xy3}TiO₃ (x = 0.1 to 0.5) has a high lithium-ion conductivity. Accordingly, when LiₓLa_{(2-x)/3}TiO₃ (x = 0.1 to 0.5) is used for forming the buffer layer (in a reference example), the resultant lithium battery has a high discharge capacity. In addition, use of LiNbO₃ in the present invention for forming the buffer layer also provides the effect of enhancing the discharge capacity of the lithium battery.

Among the above-mentioned oxides, there are some compounds that have higher lithium-ion conductivity in an amorphous state than in a crystalline state. For example, LiₓLa_{(2-xy3}TiO₃, LiNbO₃, and LiTaO₃ exhibit high lithium-ion conductivity in an amorphous state. In particular, LiₓLa₍₂₋ₓ₎₃TiO₃ exhibits high lithium-ion conductivity both in a crystalline state and in an amorphous state. An example of an indicator indicating whether the buffer layer is in an amorphous state is a specified full width at half maximum in an X-ray diffraction pattern.

(D) In the present invention, the buffer layer preferably has a thickness of 2 nm or more and 1 µm or less.

Although the buffer layer has lithium-ion conductivity, the lithium-ion conductivity of the buffer layer is lower than that of the solid electrolyte layer, which is specifically designed for lithium-ion transport. Therefore, a thickness of the buffer layer exceeding 1 µm is not preferable because migration of lithium ions is hampered by the buffer layer. In addition, there is a need for increasing the thickness of the positive-electrode layer as much as possible in order to produce a battery having a small thickness together with a discharge capacity corresponding to a desired application. Also from this standpoint, the thickness of the buffer layer is preferably 1 µm or less. On the other hand, an excessively small thickness of the buffer layer reduces the effect of suppressing nonuniformity of distribution of electric charges in the solid electrolyte layer. Accordingly, the thickness of the buffer layer is preferably 2 nm or more.

(E) In the present invention, the positive-electrode covering layer preferably has a thickness of 2 nm or more. An excessively small thickness of the positive-electrode covering layer results in the effect of suppressing the formation of a depletion layer being reduced. The upper limit of the thickness of the positive-electrode covering layer is not particularly restricted. The reason for this is as follows. Since the positive-electrode covering layer is mainly composed of LiCoO₂, which is a positive-electrode active material, a large thickness of the covering layer is less likely to cause degradation of the performance of the battery. However, the specification of a battery defines the upper limit of the thickness of the laminated layers of the battery. Thus, when the positive-electrode covering layer is too thick, the thickness of the positive-electrode layer should be decreased in compensation for the extra thickness. In this case, the advantage of selecting a positive-electrode active material in accordance with the application is degraded. Therefore, the upper limit of the thickness of the positive-electrode covering layer is preferably 50% or less of the thickness of the positive-electrode layer.

(F) In the present invention, the positive-electrode layer preferably contains one or both of LiAO₂ (A includes at least one element selected from the group consisting of Co, Mn, Al, and Ni, the case where A is only Co being excluded) and LiMn₂₋ₓBₓO₄ (B includes at least one element selected from the group consisting of Co, Mn, Al, and Ni; 0 ≤ X < 1.0).

When this configuration is satisfied, a lithium battery that contains a solid electrolyte but has a high capacity and excellent cycling characteristics can be provided.

(G) A lithium battery according to the present invention includes: a positive-electrode layer; a negative-electrode layer; and a solid electrolyte layer that is composed of a sulfide and provided between the positive-electrode layer and the negative-electrode layer, wherein the lithium battery further includes, between the positive-electrode layer and the solid electrolyte layer, a positive-electrode covering layer that covers the positive-electrode layer and a buffer layer that is provided on a surface of the solid electrolyte layer, the positive-electrode covering layer contains LiCoO₂; and the positive-electrode layer contains one or both of LiAO₂ (A includes at least one element selected from the group consisting of Co, Mn, Al, and Ni (however, a case where A is only Co is excluded)) and LiMn₂₋ₓBₓO₄ (B includes at least one element selected from the group consisting of Co, Mn, Al, and Ni; 0 ≤ X < 1.0).

In the present invention, the positive-electrode covering layer preferably covers all the surfaces of the positive-electrode layer. However, in a case where the positive-electrode covering layer covers part of the surfaces of the positive-electrode layer, the advantages of the present invention are provided in the covered part.

In the present invention, as to "LiAO₂ (A includes at least one element selected from the group consisting of Co, Mn, Al, and Ni (however, a case where A is only Co is exclud))", which can be contained in the positive-electrode layer, "a case where A is only Co is excluded" also means that the positive-electrode layer substantially does not contain LiCoO₂. It is not intended to exclude from the scope of the present invention lithium batteries containing a trace amount of LiCoO₂ in the positive-electrode layers.

(H) The present invention provides a method for producing a lithium battery including a positive-electrode layer, a negative-electrode layer, and a solid electrolyte layer that is composed of a sulfide, the method including: a step of forming, on a surface of the positive-electrode layer, a positive-electrode covering layer containing LiCoO₂; a step of forming, on a surface of the positive-electrode covering layer, a buffer layer that suppresses nonuniformity of distribution of lithium ions; and a step of forming, on a surface of the buffer layer, the solid electrolyte layer; wherein the positive-electrode layer does not contain LiCoO₂, and wherein the buffer layer is composed LiNbO₃.

The positive-electrode layer, the positive-electrode covering layer, the buffer layer, and the solid electrolyte layer can be formed by a vacuum evaporation method, a sputtering method, an ion-plating method, a laser ablation method, a thermal CVD method, or a plasma CVD method. When the layers are formed according to the present invention and also formed by the above-described methods, a lithium battery of the present invention can be efficiently produced.

Similarly to above, in the present invention, "the positive-electrode layer does not contain LiCoO₂" means that the positive-electrode layer substantially does not contain LiCoO₂. It is not intended to exclude from the scope of the present invention lithium batteries containing a trace amount of LiCoO₂ in the positive-electrode layers. Advantages

When the configuration of a lithium battery according to the present invention is employed, even in the case where the positive-electrode active material is freely selected in accordance with the application of the lithium battery, the formation of a depletion layer is effectively suppressed. Thus, the discharge capacity of the lithium battery is not reduced. As a result, a lithium battery according to the present invention has a high discharge capacity.

### Brief Description of Drawings

[Fig. 1] Figure 1 is a longitudinal sectional view of a lithium battery according to a first embodiment of the present invention.
[Fig. 2] Figure 2 is a longitudinal sectional view of a lithium battery according to a second embodiment of the present invention.

### Reference Numerals

- 1, 2: lithium battery
- 10, 20: substrate
- 11, 21: positive-electrode collector layer 12, 22 negative-electrode collector layer
- 13, 23: positive-electrode layer 14, 24 negative-electrode layer
- 15, 25: solid electrolyte layer (SE layer)
- 16, 26: positive-electrode covering layer
- 17, 27: buffer layer

### Best Modes for Carrying Out the Invention

Hereinafter, embodiments according to the present invention will be described with reference to the drawings.

In addition to a positive-electrode collector layer, a positive-electrode layer, a solid electrolyte layer, a negative-electrode layer, and a negative-electrode collector layer, all of which are included in a typical lithium battery, lithium batteries of the embodiments described below each further include a positive-electrode covering layer and a buffer layer that are disposed between the positive-electrode layer and the solid electrolyte layer. Two representative configurations of such lithium batteries will be described below as examples and each layer will also be described in detail.

### <First embodiment Laminated structure>

### <<Overall configuration>>

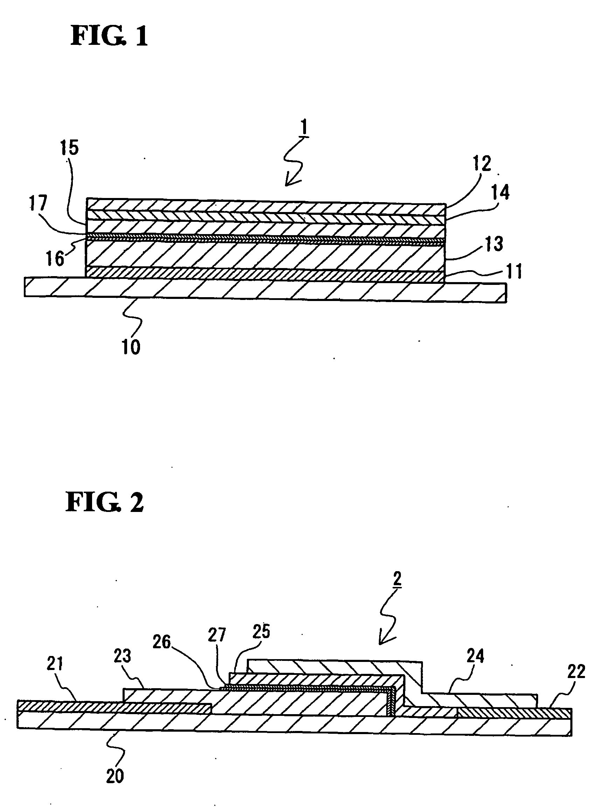

Figure 1 is a longitudinal sectional view of a lithium battery according to a first embodiment. A lithium battery 1 has a configuration in which a positive-electrode collector layer 11, a positive-electrode layer 13, a positive-electrode covering layer 16, a buffer layer 17, a solid electrolyte layer (SE layer) 15, a negative-electrode layer 14, and a negative-electrode collector layer 12 are laminated on a substrate 10 in this order.

### <<Constitutional components>>

The constitutional components will be described starting from components included in a typical lithium battery: the substrate 10, the positive-electrode collector layer 11, the positive-electrode layer 13, the SE layer 15, the negative-electrode layer 14, and the negative-electrode collector layer 12. After that, the positive-electrode covering layer 16 and the buffer layer 17, which are features of a lithium battery according to the present invention, will be described.

### (Substrate)

The substrate 10 is an insulation member configured to support the layers described below. The substrate 10 may be formed of, for example, polyphenylene sulfide (PPS) or the like. Alternatively, the substrate 10 may be formed of a ceramic such as SrTiO₃, MgO, or SiO₂. When the substrate 10 is formed of a ceramic, use of a vapor deposition method or the like for forming layers described below is less likely to thermally damage the substrate 10. Note that the substrate 10 may be eliminated depending on the configuration of a lithium battery. For example, when a battery has a configuration in which a laminate is contained in a bag-like casing, the substrate 10 is not particularly necessary and the positive-electrode collector layer 11 described in the following paragraph may also function as a substrate.

### (Positive-electrode collector layer)

The positive-electrode collector layer 11 is a metal film having a predetermined thickness. The positive-electrode collector layer 11 may be preferably formed of one material selected from aluminum (Al), nickel (Ni), alloys of the foregoing, and stainless steel. The positive-electrode collector layer 11 constituted by a metal film can be formed by a physical vapor deposition method (PVD method) or a chemical vapor deposition method (CVD method). In particular, in the case where a metal film (collector) is formed so as to have a predetermined pattern, the positive-electrode collector layer 11 having the predetermined pattern can be easily formed using an appropriate mask. Alternatively, the positive-electrode collector layer may be formed by press-bonding metal foil onto an insulation substrate.

### (Positive-electrode layer)

The positive-electrode layer 13 is a layer containing an active material occluding and releasing lithium ions. In particular, an oxide such as lithium nickel oxide (LiNiO₂), lithium manganese oxide (LiMn₂O₄), olivine-type lithium iron phosphate (LiFePO₄), LiNi_{0.5}Mn_{0.5}O₂, Li(Ni_{0.8}Co_{0.15}Al_{0.05})O₂, LiNi_{1/3}Mn_{1/3}Co_{1/3}O₂, LiNi_{0.5}Mn₁.₅O₄, or a mixture of the foregoing can be preferably used.

Of these, use of LiNi_{0.5}Mn_{1.5}O₄ allows the formation of a 5V-grade positive electrode and hence an all-solid-state lithium battery that can be discharged at a high voltage is obtained. Use of LiNiO₂ provides an all-solid-state lithium battery having a high capacity. Since LiMn₂O₄ is inexpensive, use of LiMn₂O₄ provides an all-solid-state lithium battery at low cost. Note that, in the present invention, LiCoO₂, which is generally used as a positive-electrode active material, is a compound forming the positive-electrode covering layer 16 described below and hence is substantially not used.

By specifying the crystal structure of the positive-electrode layer 13 containing the above-mentioned compound, the lithium-ion conductivity can be improved. For example, in the case where a compound having a layered rock-salt structure (e.g., LiNiO₂, LiNi_{0.5}Mn_{0.5}O₂, Li(Ni_{0.8}Co_{0.15}Al_{0.05})O₂, or LiNi_{1/3}Mn_{1/3}Co_{1/3}O₂) is employed as the active material of the positive-electrode layer 13, the ratio of plane indices of the positive-electrode layer preferably satisfies the relationship (003)/(101) < 10. In this case, the positive-electrode layer 13 has a crystal structure in which the degree of (101) orientation is high, that is, the degree of ab-axis orientation is higher than the degree of the c-axis orientation, and the lithium-ion conductivity of the positive-electrode layer 13 is improved.

Additionally, when a compound having a layered rock-salt structure is employed as the active material of the positive-electrode layer 13, its structure is the same as the structure of the positive-electrode covering layer (in the present invention, the positive-electrode covering layer contains LiCoO₂ and hence has a layered rock-salt structure). Thus, the positive-electrode layer 13 matches the positive-electrode covering layer well. As a result, the effect of enhancing the lithium-ion conductivity between the positive-electrode layer 13 and the positive-electrode covering layer and the effect of enhancing the cycling characteristics are provided. In view of this, as the active material of the positive-electrode layer 13, an active material having a layered rock-salt structure is better than an active material having a Spinel structure. Accordingly, as the active material of the positive-electrode layer 13, Li(Ni_{0.8}Co_{0.15}Al_{0.05})O₂ and LiNi_{1/3}Mn_{1/3}C_{1/3}O₂ are particularly preferable. The variation in the volume of these active materials caused by charging and discharging is small compared with LiCoO₂.

The positive-electrode layer 13 may further contain a conduction aid. Examples of the conduction aid include carbon black such as acetylene black, natural graphite, thermally expandable graphite, carbon fiber, ruthenium oxide, titanium oxide, and metal fiber made of aluminum, nickel, or the like. In particular, carbon black is preferable because a high conductivity can be ensured by a small amount of addition thereof.

As for a method of forming the positive-electrode layer 13, a dry method such as a deposition method, an ion-plating method, a sputtering method, or a laser ablation method can be employed.

Alternatively, as for a method of forming the positive-electrode layer 13, a wet method such as a coating method or a screen printing method can be employed. When the positive-electrode layer is formed by such a wet method, the positive-electrode layer may contain a binding agent such as polytetrafluoroethylene or polyvinylidene fluoride.

### (Negative-electrode collector layer)

The negative-electrode collector layer 12 is a metal film formed on the negative-electrode layer 14. The negative-electrode collector layer 12 is preferably formed of a single metal selected from copper (Cu), nickel (Ni), iron (Fe), chromium (Cr), and alloys of the foregoing. The negative-electrode collector layer 12 can also be formed by a PVD method or a CVD method as in the positive-electrode collector layer 11.

### (Negative-electrode layer)

The negative-electrode layer 14 is constituted by a layer containing an active material occluding and releasing lithium ions. For example, as the negative-electrode layer 14, one selected from the group consisting of Li metal and metals capable of forming alloys with Li metal, a mixture of the foregoing, or an alloy of the foregoing can be preferably used. As for the metals capable of forming alloys with Li (hereinafter, referred to as "alloying material"), at least one selected from the group consisting of aluminum (Al), silicon (Si), tin (Sn), bismuth (Bi), and indium (In) is preferable.

The negative-electrode layer containing such an element is preferable because the negative-electrode layer can be made to have a function as a collector and its capability of occluding and releasing lithium ions is high. In particular, silicon (Si) has the capability of occluding and releasing lithium higher than that of graphite (black lead) and can increase the energy density of the battery.

In addition, use of an alloy phase with Li metal as the negative-electrode layer is advantageous in that the migration resistance of Li ions at the interface between an alloying material having formed an alloy with Li metal and a Li-ion conductive solid electrolyte layer can be decreased, and an increase in the resistance of the alloying material in the initial charging of a first cycle can be suppressed.

Furthermore, when a metal of an alloying material is solely used as the negative-electrode layer, a problem that a discharge capacity is significantly decreased compared with a charge capacity occurs in the first charging-discharging cycle. However, by using a negative-electrode layer material prepared by forming an alloy between Li metal and an alloying material, this irreversible capacity can be substantially eliminated. Accordingly, it is not necessary to add an extra amount of a positive-electrode active material corresponding to the irreversible capacity, and the capacity density of the lithium battery can be improved.

The above-described negative-electrode layer 14 is preferably formed by a vapor-phase deposition method. Alternatively, the negative-electrode layer may be formed by placing metal foil on an SE layer and bonding the metal foil to the SE layer by pressing or an electrochemical method.

### (SE layer)

In the present invention, the SE layer 15 is a Li-ion conductor composed of a sulfide. The SE layer 15 preferably has a Li-ion conductivity (20°C) of 10⁻⁵ S/cm or more and a Li-ion transport number of 0.999 or more. In particular, the Li-ion conductivity is preferably 10⁻⁴ S/cm or more and the Li-ion transport number is preferably 0.9999 or more. In addition, the SE layer 15 preferably has an electronic conductivity of 10⁻⁸ S/cm or less.

The SE layer 15 is preferably constituted by an amorphous film, a polycrystalline film, or the like composed of a sulfide, for example, Li-P-S-O made of Li, P, S, and O or Li-P-S made of Li₂S and P₂S₅. In particular, when the SE layer 15 is composed of Li-P-S made of Li₂S and P₂S₅, the interface resistance between the SE layer 15 and the negative-electrode layer 14 can be decreased. As a result, the performance of the lithium battery can be improved.

As for a method of forming the SE layer 15, a solid-phase method or a vapor-phase deposition method can be employed. An example of the solid-phase method is a method including preparing a base powder using a mechanical milling method and then sintering the base powder to form the layer. Examples of the vapor-phase deposition method include PVD methods and CVD methods. Specific examples of the PVD methods include a vacuum evaporation method, a sputtering method, an ion-plating method, and a laser ablation method. Specific examples of the CVD methods include a thermal CVD method and a plasma CVD method. In the case where the SE layer is formed by a vapor-phase deposition method, the thickness of the SE layer can be decreased as compared with the case where the SE layer is formed by a solid-phase method.

### (Positive-electrode covering layer)

The positive-electrode covering layer 16, which is provided on the positive-electrode layer 13, is a layer containing LiCoO₂. The positive-electrode covering layer 16 may further contain a substance other than LiCoO₂, such as a conduction aid or a binding agent. The positive-electrode covering layer 16 is provided between the positive-electrode layer 13 and the buffer layer 17 described below and enhances the effect of suppressing the formation of a depletion layer in the SE layer 15, the effect provided by the buffer layer 17. The function of the positive-electrode covering layer 16 will be described in detail in the description of the buffer layer 17.

The positive-electrode covering layer 16 preferably has a thickness of 2 nm or more. When the thickness is small, the effect of suppressing the formation of a depletion layer is reduced. In contrast, when the positive-electrode covering layer 16 has too large a thickness, it is difficult to meet the recent demand for thinner and smaller batteries. Accordingly, as to the thickness of the positive-electrode covering layer 16, an optimal value should be selected in consideration of the structure, the application, and the like of the lithium battery.

Note that the presence of the positive-electrode covering layer 16 negligibly degrades the performance of the lithium battery. The reason for this is as follows. Since LiCoO₂ contained in the positive-electrode covering layer 16 is inherently a positive-electrode active material, the lithium-ion conductivity between the positive-electrode layer 13 and the positive-electrode covering layer 16 does not decrease considerably.

### (Buffer layer)

The buffer layer 17 is a layer that prevents lithium ions from migrating in a large amount from the SE layer 15 to the positive-electrode layer 13 to suppress nonuniformity of distribution of electric charges at the interface between the SE layer 15 and the positive-electrode layer 13, thereby suppressing the formation of a depletion layer in a region of the SE layer 15, the region being near the interface.

The buffer layer 17 is made of an oxide, LiNbO₃. Specific reference examples of the oxide include LiₓLa₍₂₋ₓ₎₃TiO₃ (x = 0.1 to 0.5), Li₄Ti₅O₁₂, Li_{3.6}Si_{0.6}P_{0.4}O₄, Li_{1.3}Al_{0.3}Ti_{1.7}(PO₄)_{3,} Li₁₋₈Cr_{0.8}Ti_{1.2}(PO₄)₃, LiTaO₃, and Li₁.₄In_{0.4}Ti_{1.6}(PO₄)₃. These compounds may be used alone or in combination. When some of these compounds, for example, LiₓLa_{(2-x)/3}TiO₃, LiNbO₃, and LiTaO₃ are in an amorphous state, the lithium-ion conductivity can be improved. Among the above-mentioned oxides, LiₓLa_{(2-x)/3}TiO₃ (x = 0.1 to 0.5) has an excellent lithium-ion conductivity of about 10⁻³ S/cm in both a crystalline state and an amorphous state. Therefore, when this compound is used to form the buffer layer 17, the performance of the battery can be improved.

In addition, LiNbO₃ also has an excellent lithium-ion conductivity of 10⁻⁵ S/cm or more in an amorphous state. An indicator showing that LiNbO₃ is in an amorphous state is that, in X-ray diffractometry, no peak having a full width at half maximum of 5° or less is present in the range of 22° to 25° of 2θ. When the buffer layer is formed at a temperature at which the above-mentioned compounds have a crystalline structure, the compounds constituting the buffer layer excessively diffuse into the positive-electrode covering layer and the buffer layer may become brittle.

When the positive-electrode layer active material (oxide) is LiCoO₂, the above-mentioned compounds constituting the buffer layer 17 provide the effect of preventing lithium ions from excessively migrating from the SE layer 15 to the positive-electrode layer 13. In contrast, when the positive-electrode layer active material (oxide) is other than LiCoO₂, the effect is not sufficiently provided. Thus, in the case where the positive-electrode layer 13 is composed of a compound other than LiCoO₂, the formation of a buffer layer between the positive-electrode layer and the SE layer does not sufficiently provide the effect of suppressing the formation of a depletion layer. In contrast, in the first embodiment, the positive-electrode covering layer 16 containing LiCoO₂ is formed between the positive-electrode layer 13 and the buffer layer 17, the formation of a depletion layer can be effectively suppressed by the buffer layer 17.

The compound constituting the buffer layer 17 has preferably partially diffused into the positive-electrode covering layer 16. By controlling the degree of diffusion of the compound into the positive-electrode covering layer 16, the formation of a depletion layer can be suppressed, and in addition, the adhesion between the positive-electrode covering layer 16 and the buffer layer 17 can be improved.

The buffer layer 17 preferably has a thickness of 1 µm or less. In the case where the buffer layer has too large a thickness, since the buffer layer 17 has a lower lithium-ion transport number than the SE layer 15, the buffer layer 17 may hamper exchanging of lithium ions between the positive electrode and the negative electrode and the performance of the battery may be degraded. Furthermore, in this case, it is difficult to reduce the thickness of the lithium battery.

When the buffer layer 17 has a thickness of 2 nm or more, the formation of a depletion layer is suppressed. In order to suppress the formation of a depletion layer with more certainty, the thickness of the buffer layer should be 5 nm or more.

The buffer layer 17 preferably has an electronic conductivity of 10⁻⁵ S/cm or less. By specifying the electronic conductivity as described above, polarization in the buffer layer 17 can be suppressed, and thus, the formation of a depletion layer can be suppressed. Use of the above-mentioned compounds can provide a buffer layer 17 that substantially satisfies the above electronic conductivity.

This buffer layer can be formed by a vapor-phase deposition method such as a PVD method or a CVD method.

### <<Method for producing lithium battery>>

To produce a lithium battery according to the first embodiment, on the substrate 10 for supporting layers, the positive-electrode collector layer 11, the positive-electrode layer 13, the positive-electrode covering layer 16, the buffer layer 17, the SE layer 15, the negative-electrode layer 14, and the negative-electrode collector layer 12 are laminated in this order. Alternatively, a laminate in which the positive-electrode collector layer 11, the positive-electrode layer 13, the positive-electrode covering layer 16, the buffer layer 17, and the SE layer 15 are laminated is prepared, and another laminate in which the negative-electrode collector layer 12 and the negative-electrode layer 14 are laminated is separately prepared. These two laminates may then be laminated together to produce the lithium battery 1.

In laminating the above-mentioned two laminates, a solution composed of an ionic liquid containing a lithium-containing salt may be applied to the contact surface between the laminates. As for this solution, a solution having a high lithium-ion conductivity (preferably 10⁻⁴ S/cm or more) and a low electronic conductivity (preferably 10⁻⁸ S/cm or less) is used. This solution has negligibly low electronic conductivity and has excellent ion conductivity. Therefore, even if a pin hole is formed in the SE layer 15, short-circuit between the positive electrode and the negative electrode can be prevented.

### <<Advantages of first embodiment>>

In the lithium battery 1 having the above-described configuration, only the formation of the positive-electrode covering layer 16 and the buffer layer 17 between the positive-electrode layer 13 and the SE layer 15 can suppress nonuniformity of distribution of lithium ions from the SE layer 15 to the positive-electrode layer 13 and can suppress the formation of a depletion layer in the SE layer 15. The positive-electrode covering layer 16 and the buffer layer 17 can be formed by only laminating these layers on the positive-electrode layer 13. Accordingly, the lithium battery can be produced very simply and efficiently. Furthermore, since an active material contained in the positive-electrode layer 13 can be freely selected, lithium batteries can be produced depending on their applications.

### <Second embodiment Partially laminated structure>

### <<Overall configuration>>

Figure 2 is a longitudinal sectional view of a lithium battery of a second embodiment. A lithium battery 2 includes a positive-electrode collector layer 21, a negative-electrode collector layer 22, a positive-electrode layer 23, a negative-electrode layer 24, an SE layer 25, a positive-electrode covering layer 26, and a buffer layer 27, all of which are provided on a substrate 20 having an insulation property. Materials and formation methods similar to those in the first embodiment can be used for forming the layers 21 to 27. As shown in Fig. 2, the layers 21 to 27 of the lithium battery 2 are arranged in a stepped structure. Hereinafter, the specific arrangement of the layers will be sequentially described from the substrate with reference to the drawing.

### <<Constitutional components>>

### (Substrate)

The substrate 20 is a thin plate that supports the layers. The substrate 20 may be composed of a material similar to that in the first embodiment.

### (Positive-electrode collector layer and negative-electrode collector layer)

The positive-electrode collector layer 21 and the negative-electrode collector layer 22 are thin films provided in parallel on the substrate 20. A predetermined space is provided between the collector layers 21 and 22, and the collector layers 21 and 22 are not provided on the central portion of the substrate 20.

### (Positive-electrode layer)

The positive-electrode layer 23 is provided so as to cover a part of the positive-electrode collector layer 21 and a part of the substrate 20 not having the collector layer 21 or 22 thereon. In the positive-electrode layer 23 of this example, a part located on the positive-electrode collector layer 21 has a small thickness and a part located on the substrate 20 has a large thickness such that the top surface of the positive-electrode layer 23 is flat.

### (Positive-electrode covering layer)

The positive-electrode covering layer 26 is provided so as to cover a part of the top surface and a part of the side surfaces of the positive-electrode layer 23 such that the positive-electrode layer 23 and the buffer layer 27 are not in direct contact with each other. The positive-electrode covering layer 26 of this example has a uniform thickness.

### (Buffer layer)

The buffer layer 27 is provided so as to cover a large part of the top surface and a large part of the side surface of the positive-electrode covering layer 26 such that the SE layer 25 and the positive-electrode covering layer 26 are not in direct contact with each other. The buffer layer 27 of this example has a uniform thickness.

### (SE layer)

The SE layer 25 is provided on the substrate 20 so as to cover a large part of the top surface and a large part of the side surface of the buffer layer 27 and a part of the substrate 20 on which the collector layers 21 and 22 and the positive-electrode layer 23 are not provided. That is, when the battery is viewed from above, the SE layer 25 is provided so as to overlie the positive-electrode layer 23. The SE layer 25 of the second embodiment is formed so as to have a stepped structure in a part corresponding to the positive-electrode layer 23.

### (Negative-electrode layer)

The negative-electrode layer 24 is provided so as to cover a part of the SE layer 25 and a part of the negative-electrode collector layer 22. The negative-electrode layer 24 has a uniform thickness. A part of the negative-electrode layer 24 is formed on the upper stepped portion of the SE layer 25 and another part of the negative-electrode layer 24 is disposed on the lower stepped portion of the SE layer 25 and on the negative-electrode collector layer 22. That is, when the lithium battery 2 is viewed from above, the electrode layers 23 and 24 are disposed such that the electrode layer 24 partially overlaps the electrode layer 23.

By forming the layers 21 to 27 so as to partly overlap one another as described above, the layers 21 to 27 are arranged in a stepped structure, as shown in Fig. 2. The number of layers at the position where the maximum number of layers overlap (the position where the positive-electrode layer 23, the positive-electrode covering layer 26, the buffer layer 27, the SE layer 25, and the negative-electrode layer 24 are laminated) is five, which is smaller than the number of layers in the case where all the layers 21 to 27 are stacked on top of one another. Exposed portions of the collector layers 21 and 22 on which the positive-electrode layer 23 and the negative-electrode layer 24 are not provided can be used as lead portions for receiving and supplying electric power from/to the outside.

In the configuration of this example, the two collector layers are both in contact with the substrate. Alternatively, the negative-electrode collector layer may be provided at the lower position of the stepped structure (the lower stepped portion) of the top surface of the negative-electrode layer. In addition, in the configuration of this example, collector layers for the electrodes are provided. However, in the case where the electrode layers are made of an alloy or the like and each of the electrode layers has a function as a collector, collector layers need not be provided. Therefore, the number of layers to be laminated can be further decreased.

### <<Advantages of second embodiment>>

The lithium battery 2 of the second embodiment is a thin lithium battery having a high capacity and an excellent productivity, as in the first embodiment. Furthermore, as described above, the lithium battery 2 does not have a structure in which layers entirely overlap one another but has a structure in which layers partly overlap one another, and thus, the lithium battery 2 has a relatively small thickness. Consequently, the lithium battery 2 can be made to have a smaller thickness than the lithium battery of the first embodiment.

### EXAMPLE 1

Hereinafter, a coin cell lithium battery (Sample 1) having the configuration described in the first embodiment (also refer to Fig. 1) was actually produced and the discharge capacity of this battery was determined. Coin cell lithium batteries (Samples 101 and 102) serving as comparative examples were also produced and the discharge capacity of these batteries was determined. In these produced lithium batteries, the positive-electrode collector layer 11 also functioned as the substrate 10.

### <Sample 1>

As for Sample 1, a lithium battery 1 in which LiNi_{0.5}Mn_{1.5}O₄ was used as a positive-electrode active material contained in the positive-electrode layer 13 was produced. The configurations and thicknesses of layers included in the lithium battery are as follows.

Positive-electrode collector layer 11 SUS316, 0.5 mm (also functions as the substrate 10)

| | |
|---|---|
| Positive-electrode layer 13 | LiNi_{0.5}Mn_{1.5}O₄, 1 µm |
| Positive-electrode covering layer 16 | LiCoO₂, 20 nm |
| Buffer layer 17 | LiNbO₃, 15 nm |
| SE layer 15 | Li₂S-P₂S₅, 3 µm |
| Negative-electrode layer 14 | Li, 1 µm |
| Negative-electrode collector layer 12 | SUS316, 0.5 mm |

### <Sample 101>

As for Sample 101, a lithium battery in which, between the positive-electrode covering layer 16 and the buffer layer 17, the positive-electrode covering layer 16 was not provided but only the buffer layer 17 was provided was produced. Sample 101 was the same as the lithium battery of Sample 1 except that the positive-electrode covering layer 16 was not provided.

### <Sample 102>

As for Sample 102, a conventional lithium battery having neither the positive-electrode covering layer 16 nor the buffer layer 17 was produced. Sample 102 was the same as Sample 1 except that the positive-electrode covering layer 16 and the buffer layer 17 were not provided.

### <Evaluation>

The performance of the lithium batteries of Samples 1, 101, and 102 was evaluated by measuring the discharge capacity of these lithium batteries. The measurement conditions were a charging-discharging current of 0.02 µA/cm² a charging termination voltage of 4.8 V, and a discharging termination voltage of 3 V

### <Evaluation results>

The discharge capacity of Sample 1 was 140 mAh/g. The discharge capacity of Sample 101 was 50 mAh/g. The discharge capacity of Sample 102 was 20 mAh/g. Accordingly, Sample 101, which was a battery having the buffer layer, had a higher discharge capacity than Sample 102, which was a conventional lithium battery. Compared with Sample 101, Sample 1, which was a lithium battery having the positive-electrode covering layer as well as the buffer layer, had a high discharge capacity.

The only difference between the battery (Sample 1) according to the present invention and the other batteries (Samples 101 and 102) was the presence of both of the positive-electrode covering layer and the buffer layer. Therefore, it has been demonstrated that the presence of both of these layers suppresses the formation of a depletion layer in the SE layer and, as a result, the capacity of the lithium battery is increased.

### EXAMPLE 2

Lithium batteries of Samples 2, 3, and 103 below were produced. These lithium batteries were subjected to the measurement of discharge capacity and evaluation of the cycling characteristics.

### <Sample 2>

As for Sample 2, a lithium battery 1 in which LiNi_{1/3}Mn_{1/3}Co_{1/3}O₂ was used as a positive-electrode active material contained in the positive-electrode layer 13 was produced. The configurations and thicknesses of layers included in the lithium battery are as follows.

| | |
|---|---|
| Positive-electrode collector layer 11 | Al, 0.1 µm |
| Positive-electrode layer 13 | LiNi_{1/3}Mn_{1/3}Co_{1/3}O₂, 60 µm |
| Positive-electrode covering layer 16 | LiCoO₂, 20 nm |
| Buffer layer 17 | LiNbO₃, 15 nm |
| SE layer 15 | Li₂S-P₂S₅, 10 µm |
| Negative-electrode layer 14 | Li, 10 µm |
| Negative-electrode collector layer 12 | SUS316, 0.5 mm |

### <Sample 3>

Sample 3 was the same as the lithium battery of Sample 2 except that Li(Ni_{0.8}Co_{0.15}Al_{0.05})O₂ was used as a positive-electrode active material contained in the positive-electrode layer 13.

### <Sample 103>

Sample 103 was the same as the lithium battery of Sample 2 except that LiFePO₄ was used as a positive-electrode active material contained in the positive-electrode layer 13.

### <Evaluation>

The conditions of a cycling test were a charging voltage of 4.2 V, a cutoff voltage of 3.0 V, and a current density of 0.05 mA/cm². Note that, for Sample 103, the charging voltage was 4.0 V and the cutoff voltage was 2.5 V.

In the first cycle of the cycling test, a voltage drop caused within 60 seconds after the initiation of discharging of a lithium battery was used to calculate the battery resistance (Ω·cm²) of the lithium battery.

After 100 cycles were performed, the charging-discharging efficiency (discharge capacity in 100th cycle/ charge capacity in 100th cycle) and the capacity retention (discharge capacity in 100th cycle/ maximum discharge capacity in the cycling test) were determined.

### <Evaluation results>

The results of the above-described measurements are shown in Table.

**[Table]**

| | **Active material of positive-electrode layer** | **Initial capacity (mA/g)** | **Charging-discharging efficiency (%) after 100 cycles** | **Capacity retention (%) after 100 cycles** |
|---|---|---|---|---|
| **Sample 2** **lithium battery** | LiNi_{1/3}Mn_{1/3}CO_{1/3}0₂ | 150 | 98.7 | 98.5 |
| **Sample 3** **lithium battery** | Li (Ni_{0.8}Co_{0.15}Al_{0.05})0₂ | 160 | 98.5 | 98.0 |
| **Sample 103** **lithium battery** | LiFePO₄ | 150 | 90.0 | 43.0 |

Table shows that, all the lithium batteries of Samples 2, 3, and 103 each had, as an initial capacity, a discharge capacity that a positive-electrode active material inherently has. Table also shows that the cycling characteristics of Samples 2 and 3 in which the structure of the positive-electrode layer was the same as the structure of the positive-electrode covering layer were better than the cycling characteristics of Sample 103 in which the structure of the positive-electrode layer was different from the structure of the positive-electrode covering layer.

As for Sample 103, the lithium battery was disassembled after the test was terminated. A partial separation between the positive-electrode layer and the positive-electrode covering layer was observed.

The above-described embodiments may be appropriately changed without departing from the spirit and scope of the present invention. For example, the arrangement of the positive-electrode layer, the solid electrolyte layer, and the negative-electrode layer of a lithium battery may be an arrangement other than in the above-described embodiments: an arrangement (non-laminated structure) in which the positive-electrode layer and the negative-electrode layer do not overlap one another when the battery is viewed from above. Whichever structure is selected, a positive-electrode covering layer and a buffer layer should be provided between the positive-electrode layer and the solid electrolyte layer such that the positive-electrode layer and the solid electrolyte layer are not in direct contact with each other.

The present application is based on Japanese Patent Application (No. 2007-294843) filed on November 13, 2007, the entire contents of which are incorporated herein by reference. All the references cited herein are also incorporated in its entirety.

### Industrial Applicability

Lithium batteries according to the present invention are suitably usable as a power supply of portable devices and the like.

## Claims

1. A lithium battery comprising:
a positive-electrode layer;
a negative-electrode layer;
a solid electrolyte layer that is composed of a sulfide and mediates conduction of lithium ions between the positive-electrode layer and the negative-electrode layer;
a positive-electrode covering layer that is provided on a positive-electrode-layer side of a region between the positive-electrode layer and the solid electrolyte layer and contains LiCoO₂; and
a buffer layer that is provided on a solid-electrolyte-layer side of the region between the positive-electrode layer and the solid electrolyte layer and suppresses nonuniformity of distribution of lithium ions in a near-interface region of the solid electrolyte layer, the near-interface region being close to the positive-electrode covering layer,
wherein:
the positive-electrode layer does not contain LiCoO₂; and
the buffer layer is composed of LiNbO₃.

2. The lithium battery according to Claim 1,
wherein the buffer layer has a thickness of 2 nm or more and 1 µm or less.

3. The lithium battery according to Claim 1 or Claim 2,
wherein the positive-electrode covering layer has a thickness of 2 nm or more.

4. The lithium battery according to Claim 1 or Claim 2, wherein the positive-electrode layer contains one or both of:
LiAO₂, A including at least one element selected from the group consisting of Co, Mn, Al, and Ni, the case where A is only Co being excluded; and
LiMn_{2X}B_{X}O₄, B including at least one element selected from the group consisting of Co, Mn, Al, and Ni; 0≤ X <1.0.

5. A method for producing a lithium battery including a positive-electrode layer, a negative-electrode layer, and a solid electrolyte layer that is composed of a sulphide, the method comprising:
a step of forming, on a surface of the positive-electrode layer, a positive-electrode covering layer containing LiCoO₂;
a step of forming, on a surface of the positive-electrode covering layer, a buffer layer that suppresses nonuniformity of distribution of lithium ions; and
a step of forming, on a surface of the buffer layer, the solid electrolyte layer,
wherein:
the positive-electrode layer does not contain LiCoO₂; and
the buffer layer is composed of LiNbO₃.

## Patentansprüche

1. Lithiumbatterie, umfassend:
eine positive Elektrodenschicht,
eine negative Elektrodenschicht,
eine feste Elektrolytschicht, die sich aus einem Sulfid zusammensetzt und die Leitung von Lithiumionen zwischen der positiven Elektrodenschicht und der negativen Elektrodenschicht mediiert,
eine positive Elektroden-Abdeckschicht, die auf einer Seite der positiven Elektrodenschicht an einem Bereich zwischen der positiven Elektrodenschicht und der festen Elektrolytschicht vorgesehen ist und LiCoO₂ enthält, und
eine Pufferschicht, die auf einer Seite einer festen Elektrolytschicht bei dem Bereich zwischen der positiven Elektrodenschicht und der festen Elektrolytschicht vorgesehen ist und die Nichtgleichmäßigkeit der Verteilung von Lithiumionen in einem nahen Grenzflächenbereich der festen Elektrolytschicht unterdrückt, wobei der nahe Grenzflächenbereich eng bei der positiven Elektroden-Abdeckschicht liegt, worin:
die positive Elektrodenschicht nicht LiCoO₂ enthält und
die Pufferschicht sich aus LiNbO₃ zusammensetzt.

2. Lithiumbatterie nach Anspruch 1, worin die Pufferschicht eine Dicke von 2 nm oder mehr und 1 µm oder weniger hat.

3. Lithiumbatterie nach Anspruch 1 oder 2, worin die positive Elektrodenabdeckschicht eine Dicke von 2 nm oder mehr hat.

4. Lithiumbatterie nach Anspruch 1 oder 2, worin die positive Elektrodenschicht eines oder beide von den folgenden enthält:
LiAO₂, worin A zumindest ein Element enthält, ausgewählt aus der Gruppe bestehend aus Co, Mn, Al und Ni, wobei der Fall, bei dem A nur Co ist, ausgeschlossen ist, und
LiMn₂ₓBₓO₄, worin B zumindest ein Element enthält, ausgewählt aus der Gruppe bestehend aus Co, Mn, Al und Ni; 0 ≤ X < 1.0.

5. Verfahren zur Erzeugung einer Lithiumbatterie, umfassend eine positive Elektrodenschicht, eine negative Elektrodenschicht und eine feste Elektrolytschicht, die sich aus einem Sulfid zusammensetzt, wobei das Verfahren umfasst:
einen Schritt zur Bildung einer positiven Elektroden-Abdeckschicht, umfassend LiCoO₂, auf einer Oberfläche der positiven Elektrodenschicht,
einen Schritt der Bildung einer Pufferschicht, die die Nichtgleichmäßigkeit der Verteilung von Lithiumionen unterdrückt, auf einer Oberfläche der positiven Elektroden-Abdeckschicht, und
einen Schritt zur Bildung der festen Elektrolytschicht auf einer Oberfläche der Pufferschicht,
worin
die positive Elektrodenschicht nicht LiCoO₂ enthält, und
die Pufferschicht sich aus LiNbO₃ zusammensetzt.

## Revendications

1. Batterie au lithium comprenant :
une couche d'électrode positive ;
une couche d'électrode négative ;
une couche d'électrolyte solide qui se compose d'un sulfure et sert de médiateur de la conduction des ions lithium entre la couche d'électrode positive et la couche d'électrode négative ;
une couche de revêtement de l'électrode positive qui se trouve sur un côté de la couche d'électrode positive d'une région entre la couche d'électrode positive et la couche d'électrolyte solide et contient du LiCoO₂ ; et
une couche tampon qui se trouve sur un côté de la couche d'électrolyte solide de la région entre la couche d'électrode positive et la couche d'électrolyte solide et élimine la non-uniformité de distribution des ions lithium dans une région proche de l'interface de la couche d'électrolyte solide, la région proche de l'interface étant proche de la couche de revêtement de l'électrode positive,
dans laquelle
la couche d'électrode positive ne contient pas de LiCoO₂ ; et
la couche tampon se compose de LiNbO₃.

2. Batterie au lithium selon la revendication 1, dans laquelle la couche tampon a une épaisseur supérieure ou égale à 2 nm et inférieure ou égale à 1 µm.

3. Batterie au lithium selon la revendication 1 ou la revendication 2, dans laquelle la couche de revêtement de l'électrode positive a une épaisseur supérieure ou égale à 2 nm.

4. Batterie au lithium selon la revendication 1 ou la revendication 2, dans laquelle la couche d'électrode positive contient un ou les deux de :
LiAO₂, A incluant au moins un élément choisi dans le groupe constitué par Co, Mn, AI et Ni, le cas où A est uniquement Co étant exclu ; et
LiMn₂ₓBₓO₄, B incluant au moins un élément choisi dans le groupe constitué par Co, Mn, AI et Ni ; 0 ≤ X < 1,0.

5. Procédé de production d'une batterie au lithium comprenant une couche d'électrode positive, une couche d'électrode négative et une couche d'électrolyte solide qui se compose d'un sulfure, le procédé comprenant :
une étape de formation, sur une surface de la couche d'électrode positive, d'une couche de revêtement de l'électrode positive contenant du LiCoO₂ ;
une étape de formation, sur une surface de la couche de revêtement de l'électrode positive, d'une couche tapon qui élimine la non-uniformité de distribution des ions lithium ; et
une étape de formation, sur une surface de la couche tampon, de la couche d'électrolyte solide,
dans lequel
la couche d'électrode positive ne contient pas de LiCoO₂ ; et
la couche tampon se compose de LiNbO₃.
